(19) Europäisches Patentamt / European Patent Office / Office européen des brevets

(11) **EP 4 317 489 A1**

(12) **EUROPEAN PATENT APPLICATION**
published in accordance with Art. 153(4) EPC

(43) Date of publication:
**07.02.2024 Bulletin 2024/06**

(21) Application number: **22937920.1**

(22) Date of filing: **22.04.2022**

(51) International Patent Classification (IPC):
*C22C 3/00* (2006.01)  *C22C 1/08* (2006.01)
*A61L 27/04* (2006.01)  *C22C 9/00* (2006.01)
*B22F 3/11* (2006.01)

(52) Cooperative Patent Classification (CPC):
**A61L 27/04; B22F 3/11; C22C 1/08; C22C 3/00; C22C 9/00**

(86) International application number:
**PCT/CN2022/088398**

(87) International publication number:
**WO 2023/201684 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **WANG, Manman**
**Ningde, Fujian 352100 (CN)**
• **GE, Xiaoming**
**Ningde, Fujian 352100 (CN)**

(74) Representative: **Gong, Jinping**
**CocreateIP**
**Neumarkterstr. 21**
**81673 München (DE)**

(54) **POROUS MATERIAL AND PREPARATION METHOD THEREFOR, CURRENT COLLECTOR, SECONDARY BATTERY AND DEVICE**

(57) This application provides a porous material and a preparation method thereof, a current collector, a secondary battery, and an apparatus. The porous material has pores of a first pore size and pores of a second pore size. The second pore size is m nanometers, and $10 < m < 400$; and the first pore size is n micrometers, and $0.5 \leq n \leq 20$. An apparent volume of the porous material is V, a total pore volume of the pores of the second pore size is $V_2$, a total pore volume of the pores of the first pore size is $V_1$, and the porous material satisfies the following relationships: $(V_1 + V_2)/V = 20\%-90\%$, $V_2/V = 15\%-70\%$, and $V_1/V = 5\%-70\%$.

FIG. 8.

EP 4 317 489 A1

**Description**

**TECHNICAL FIELD**

This application relates to the field of metal material technologies, and in particular, to a porous material and a preparation method thereof, a current collector, a secondary battery, and an apparatus.

**BACKGROUND**

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Along with the great development of secondary batteries, higher requirements are imposed on their energy density, cycling performance, and the like.

Lithium metal is considered a desired negative electrode material for high-energy lithium-ion batteries due to its high theoretical specific capacity (3860 mAh/g) and low electrochemical potential. However, batteries using lithium metal as negative electrodes have the following problems during cycling: generation of lithium dendrites, chemical reactions with an electrolyte, and infinite volume swelling of the lithium negative electrodes during deposition and stripping. These problems are bound to cause safety hazards and low cycling efficiency for batteries and seriously impede the practical application of lithium metal as the negative electrodes.

**SUMMARY**

In view of the foregoing topics, this application is intended to provide a novel porous material and a preparation method thereof, a current collector, a secondary battery, and an apparatus. In the porous material preparation method, a multiphase alloy containing an $\alpha$Mn phase and a $\gamma$Mn-M phase is innovatively used to obtain a porous material with multilevel pore size distribution. The novel porous material with multilevel pore size distribution in this application is particularly suitable for use in anode-free (anode free) metal batteries (for example, anode-free lithium metal batteries or anode-free sodium metal batteries) or batteries with negative electrodes containing active metal/alloy.

According to a first aspect, this application provides a porous material. The porous material has pores of a first pore size and pores of a second pore size. The first pore size is n micrometers, and $0.5 \leq n \leq 20$; and the second pore size is m nanometers, and $10 < m < 400$. An apparent volume of the porous material is V, a total pore volume of the pores of the first pore size is $V_1$, a total pore volume of the pores of the second pore size is $V_2$, and the porous material satisfies the following relationships: $(V_1 + V_2)/V = 20\%\text{-}90\%$, $V_2/V = 15\%\text{-}70\%$, and $V_1/V = 5\%\text{-}70\%$.

The porous material in the foregoing solution is characterized by innovative multilevel pore size distribution. This novel porous material is particularly suitable for use in anode-free (anode free) metal batteries (for example, anode-free lithium metal batteries or anode-free sodium metal batteries) or batteries with negative electrodes containing active metal/alloy. Inner walls of the pores of the first pore size (hereinafter referred to as macropores) may serve as a matrix for active substance deposition. In addition, the macropores provide electrolyte infiltration paths. Inner walls of the pores of the second pore size (hereinafter referred to as micropores) serve as a matrix for active substance deposition. The micropores increase the specific surface area of the material, thereby allowing the porous material to be loaded with more active substances. In addition, the micropores also serve as a template for active substance deposition. Specifically, subject to the limitation of the size of micropores, the active substance deposited in the micropores is measured in nanometers, and the nanoscale active substance has a higher ionic conductivity due to a small size. This can improve the overall ionic conductivity of the electrodes, improve the rate performance of the battery, and ultimately improve the capacity, cycling stability, and rate performance of the battery. Furthermore, the micropores can also restrict swelling of the active material to avoid failure of the active material due to pulverization.

In some embodiments, a total specific surface area of the porous material is S, a specific surface area of the pores of the first pore size is $S_1$, and a specific surface area of the pores of the second pore size is $S_2$; where $S_1/S = 7\%\text{-}32\%$ and $S_2/S = 68\%\text{-}93\%$. The porous material in the foregoing solution is characterized by a novel specific surface area distribution of pores.

In some embodiments, the second pore size is m nanometers, and $20 < m < 200$. The porous material in the foregoing solution is characterized by an innovative pore size distribution.

In some embodiments, the first pore size is n micrometers, and $0.5 \leq n \leq 10$. The porous material in the foregoing solution is characterized by an innovative pore size distribution.

In some embodiments, the porous material is made of a metal substance or an alloy containing element M, and the element M is selected from copper, aluminum, or a combination thereof. The porous material in the foregoing solution has an innovative component.

According to a second aspect, this application provides a porous material preparation method. The method includes:

providing a multiphase alloy, where the multiphase alloy contains an $\alpha$Mn phase and a $\gamma$Mn-M phase, and element M is selected from copper, aluminum, or a combination thereof; and
removing at least part of element Mn from the $\alpha$Mn phase and at least part of element Mn from the $\gamma$Mn-M phase by using a dealloying method.

The porous material has pores of a first pore size and pores of a second pore size. The first pore size is n micrometers, and $0.5 < n < 20$; and the second pore size is m nanometers, and $10 < m < 400$. An apparent volume of the porous material is V, a total pore volume of the pores of the second pore size is $V_2$, a total pore volume of the pores of the first pore size is $V_1$, and the porous material has one or more of the following characteristics: (1) $(V_1 + V_2)/V = 20\%\text{-}90\%$, (2) $V_2/V = 15\%\text{-}70\%$, and (3) $V_1/V = 5\%\text{-}70\%$.

In the foregoing method, the multiphase alloy with a unique organizational structure is dealloyed innovatively to obtain the porous material with an innovative pore distribution characteristic.

In some embodiments, based on all element Mn in the $\alpha$Mn phase, at least more than 90 at.%, for example, more than 95 at.%, of element Mn is removed from the $\alpha$Mn phase using the dealloying method. Based on this, the obtained porous material is characterized by an innovative pore distribution.

In some embodiments, based on all element Mn in the yMn-M phase, at least more than 90 at.%, for example, more than 95 at.%, of element Mn is removed from the yMn-M phase using the dealloying method. Based on this, the obtained porous material is characterized by an innovative pore distribution.

In some embodiments, based on all the element M in the multiphase alloy, less than 10 at.%, for example, less than 5 at.%, of the element M is removed using the dealloying method. Based on this, the obtained porous material is characterized by an innovative pore distribution.

In some embodiments, a percentage of element Mn in the $\alpha$Mn phase is > 99 at.%. Based on this, the obtained porous material is characterized by an innovative pore distribution.

In some embodiments, a percentage of element Mn in the yMn-M phase is 40 at.%-80 at.%, for example, 40 at.%-50 at.%, 50 at.%-60 at.%, 60 at.%-70 at.%, or 70 at.%-80 at.%. Based on this, the obtained porous material is characterized by an innovative pore distribution.

In some embodiments, the yMn-M phase is a solid solution. Based on this, the obtained porous material is characterized by an innovative pore distribution.

In some embodiments, a percentage of the $\alpha$Mn phase in the multiphase alloy is 22 vol%-70 vol%, for example, 25 vol%-30 vol%, 30 vol%-40 vol%, 40 vol%-50 vol%, 50 vol%-60 vol%, or 60 vol%-70 vol%. Based on this, the obtained porous material is characterized by an innovative pore distribution.

In some embodiments, a percentage of the $\gamma$Mn-M phase in the multiphase alloy is 30 vol%-78 vol%, for example, 30 vol%-40 vol%, 40 vol%-50 vol%, 50 vol%-60 vol%, or 60 vol%-70 vol%. Based on this, the obtained porous material is characterized by an innovative pore distribution.

In some embodiments, in a metallographic image of the multiphase alloy, an average size of the $\alpha$Mn phase is 0.5-10 micrometers. The average size herein can be understood as an average diameter of equal-area circles of the $\alpha$Mn phase.

In some embodiments, in the metallographic image of the multiphase alloy, an average size of the $\gamma$Mn-M phase is 0.5-10 micrometers. The average size herein can be understood as an average diameter of equal-area circles of the $\gamma$Mn-M phase.

In some embodiments, in the metallographic image of the multiphase alloy, the average size of the $\alpha$Mn phase (bright white in the metallographic structure) is 0.5-10 micrometers. Based on this, the obtained porous material is characterized by an innovative pore distribution.

In some embodiments, in the metallographic image of the multiphase alloy, the average size of the $\gamma$Mn-M phase (black grey in the metallographic structure) is a micrometers $\times$ b micrometers, where a = 0.89-5 (for example, 1-2, 1-2, 3-4, or 4-5) and b = 0.89-1.75 (for example, 1-1.5). Based on this, the obtained porous material is characterized by an innovative pore distribution.

In some embodiments, the $\alpha$Mn phase and the $\gamma$Mn-M phase are uniformly distributed in the multiphase alloy. Based on this, the obtained porous material is characterized by an innovative pore distribution.

In some embodiments, the multiphase alloy contains element Mn and the element M, a percentage of element Mn is 60 at.%-90 at.%, for example, 70 at.%-80 at.%, and a percentage of the element M is 10 at.%-40 at.%, for example, 20 at.%-30 at.%, and the element M is selected from copper, aluminum, or a combination thereof. Based on this, the obtained porous material is characterized by an innovative pore distribution.

In some embodiments, the dealloying method is selected from chemical corrosion, electrochemical corrosion, or a combination thereof. Based on this, the obtained porous material is characterized by an innovative pore distribution.

In some embodiments, the porous material preparation method further includes steps of preparing the multiphase alloy, and the steps specifically include:

provided an alloy precursor, where the alloy precursor contains the element M and element Mn, and the element M is selected from copper, aluminum, or a combination thereof;
performing first heat treatment on the alloy precursor to obtain a first product, where the first product contains a yMn-M phase; and
performing second heat treatment on the product obtained in the previous step to obtain a second product, where the second product contains an $\alpha$Mn phase and a $\gamma$Mn-M phase. Based on this, the obtained porous material is characterized by an innovative pore distribution. The first product containing the yMn-M phase has excellent room-temperature plasticity. When the first product is processed using a plasticizing method such as forging, rolling, and drawing, processed products of different shapes and sizes can be obtained. The processed product can have a stable shape and size during subsequent heat treatment and dealloying.

In some embodiments, a temperature for the first heat treatment is 700°C-865°C, for example, 700°C-730°C, 730°C-760°C, 760°C-790°C, 790°C-820°C, or 820°C-850°C. Based on this, the obtained porous material is characterized by an innovative pore distribution.

In some embodiments, a time for the first heat treatment is 0.16 hours or longer, for example, 1 hour-2 hours. Based on this, the obtained porous material is characterized by an innovative pore distribution.

In some embodiments, cooling, for example, water cooling, is performed at a cooling speed of 20°C/s-1000°C/s after the first heat treatment. Based on this, the obtained porous material is characterized by an innovative pore distribution.

In some embodiments, a percentage of the yMn-M phase in the first product is 95 vol%-100 vol%. The first product containing the yMn-M phase has good plasticity and can be processed into processed products of different shapes and sizes using a plasticizing method (forging, rolling, drawing, or the like).

In some embodiments, the method further includes an operation of plasticizing the first product prior to the second heat treatment.

In some embodiments, a temperature for the second heat treatment is 500°C-700°C, for example, 550°C-600°C or 600°C-650°C. Based on this, the obtained porous material is characterized by an innovative pore distribution.

In some embodiments, a time for the second heat treatment is 1 hour-4 hours, for example, 2 hours-3 hours. Based on this, the obtained porous material is characterized by an innovative pore distribution.

In some embodiments, cooling, for example, water cooling, is performed at a cooling speed of 20°C/s-1000°C/s after the second heat treatment. Based on this, the obtained porous material is characterized by an innovative pore distribution.

In some embodiments, a percentage of the $\alpha$Mn phase in the second product is 22 vol%-70 vol%, for example, 25 vol%-30 vol%, 30 vol%-40 vol%, 40 vol%-50 vol%, 50 vol%-60 vol%, or 60 vol%-70 vol%, and a percentage of the yMn-M phase is 30 vol%-78 vol%, for example, 30 vol%-40 vol%, 40 vol%-50 vol%, 50 vol%-60 vol%, or 60 vol%-70 vol%.

In some embodiments, the alloy precursor is an ingot. Based on this, the porous material preparation method features low costs. Based on this solution, a porous material of a large volume can be prepared.

In some embodiments, the porous material obtained using the method has pores of a first pore size and pores of a second pore size; the second pore size is m nanometers, and $10 < m < 400$, for example, $20 < m < 200$; and the first pore size is n micrometers, and $0.5 \leq n \leq 20$, for example, $0.5 \leq n \leq 10$. Based on this, the obtained porous material is characterized by an innovative pore distribution.

In some embodiments, a total specific surface area of the porous material is S, a specific surface area of the pores of the first pore size is $S_1$, and a specific surface area of the pores of the second pore size is $S_2$; where $S_1/S = 7\%-32\%$ and $S_2/S = 68\%-93\%$. Based on this, the obtained porous material is characterized by an innovative pore distribution.

In some embodiments, this application provides a porous material prepared using the method according to any one of the foregoing embodiments.

In some embodiments, this application provides a current collector including the porous material according to any one of the foregoing embodiments.

In some embodiments, this application provides a secondary battery including the current collector according to any one of the foregoing embodiments.

In some embodiments, this application provides an apparatus including the secondary battery according to any one of the foregoing embodiments, and the secondary battery provides electric energy for the apparatus.

Beneficial effects

According to a phase diagram of a Mn-Cu binary alloy, the Mn-Cu binary alloy (Mn has a percentage of 90 at.%-60 at.%) is of a single-phase $\gamma$-Mn structure at a temperature of 700°C-865°C and is of a biphasic $\alpha/\gamma$ structure at a temperature of 500°C-700°C. Therefore, a Mn-Cu alloy prepared by means of melting can be first annealed at a high temperature (700°C-865°C) to obtain a single-phase y alloy with excellent plasticity, so as to prepare precursor alloys of different shapes. Subsequently, aging treatment is performed at a low temperature (500°C-700°C) to form a biphasic $\alpha/\gamma$ structure used for preparing the final porous material.

One or more embodiments of this application have one or more of the following beneficial effects.

(1) The porous material preparation method features low costs.

(2) The porous material preparation method can be used to obtain a porous material of a large size, and the dealloyed product can maintain the shape and size of the matrix.

(3) In the porous material preparation, the first product containing the yMn-M phase has good plasticity, and can be processed into processed products of different shapes and sizes using a plasticizing method (forging, rolling, drawing, or the like). Subsequent second heat treatment and dealloying operations on the processed product have almost no change in the shape or size of the processed product.

(4) The porous material preparation method allows flexible adjustment of the pore sizes and proportions of pores of a second pore size and pores of a first pore size in the porous material. For example, the temperature and time for the second heat treatment are adjusted to control the percentage and size of the $\alpha$Mn phase in the second product, thereby adjusting the percentage and pore size of the pores of the first pore size in the porous material. For another example, the corrosion temperature for dealloying is adjusted to control the percentage and pore size of the pores of the second pore size in the porous material.

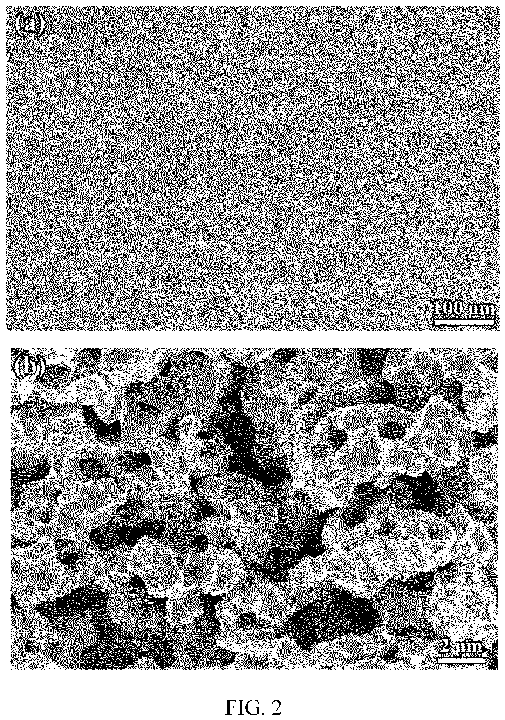

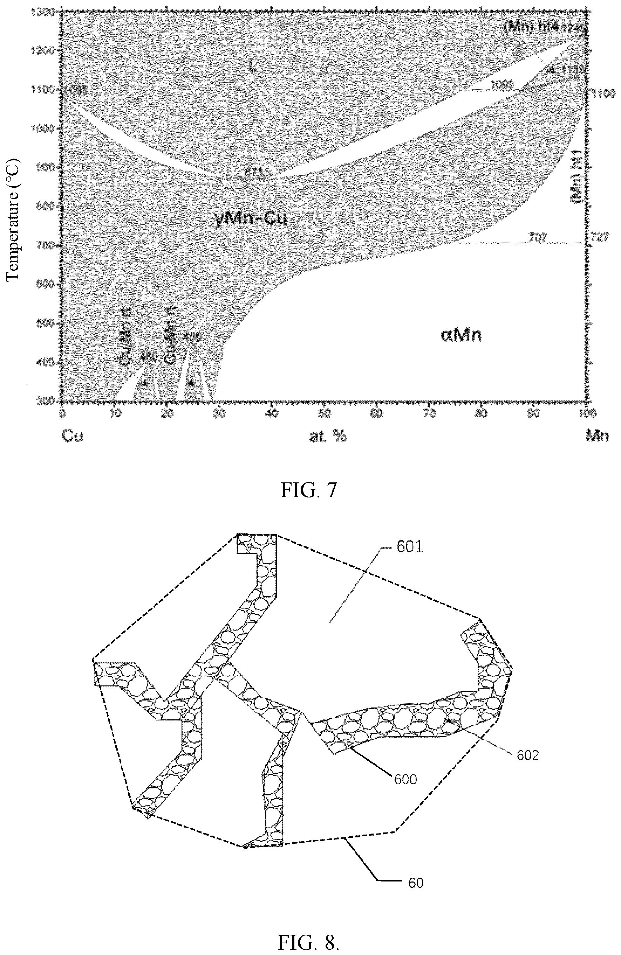

(5) Refer to scanning electron microscope images of the porous material provided in an embodiment shown in FIG. 2 to FIG. 5 and a diagram of the porous material shown in FIG. 8. The porous material of this application has pores of a first pore size and pores of a second pore size. Inner walls of the pores of the first pore size (hereinafter referred to as macropores) may serve as a matrix for active substance deposition. In addition, the macropores provide electrolyte infiltration paths. Inner walls of the pores of the second pore size (hereinafter referred to as micropores) serve as a matrix for active substance deposition. The micropores increase the specific surface area of the material, thereby allowing the porous material to be loaded with more active substances. In addition, the micropores also serve as a template for active substance deposition. Specifically, subject to the limitation of the size of micropores, the active substance deposited in the micropores is measured in nanometers, and the nanoscale active substance has a higher ionic conductivity due to a small size. This can improve the overall ionic conductivity of the electrodes, improve the rate performance of the battery, and ultimately improve the capacity, cycling stability, and rate performance of the battery. Furthermore, the micropores can also restrict swelling of the active material to avoid failure of the active material due to pulverization.

**BRIEF DESCRIPTION OF DRAWINGS**

(a) in FIG. 1 is an XRD diffraction pattern of a Mn-Cu alloy after first heat treatment according to some embodiments; and (b) in FIG. 1 is an XRD diffraction pattern of the Mn-Cu alloy after second heat treatment according to some embodiments.

FIG. 2 shows scanning electron microscope images of porous copper prepared in Example 1, where (a) is taken at a low magnification and (b) is taken at a high magnification.

FIG. 3 is a scanning electron microscope image of porous copper prepared in Example 2.

FIG. 4 is a scanning electron microscope image of porous copper prepared in Example 3.

FIG. 5 shows scanning electron microscope images of porous copper prepared in Example 4, where (a) is taken at a low magnification and (b) is taken at a high magnification.

FIG. 6 shows scanning electron microscope images of porous copper prepared in a comparative example, where (a) is taken at a low magnification and (b) is taken at a high magnification.

FIG. 7 is a phase diagram of a Cu-Mn alloy.

FIG. 8 is a schematic diagram of a porous structure of a porous material according to some embodiments of this application.

FIG. 9 shows an overall view and exploded view of the secondary battery according to an embodiment of this application.

FIG. 10 is a schematic diagram of a battery module according to an embodiment of this application.

FIG. 11 is a schematic diagram of a battery pack according to an embodiment of this application.

FIG. 12 is an exploded view of the battery pack according to the embodiment of this application in FIG. 11.

FIG. 13 is a schematic diagram of an apparatus using a secondary battery as a power source according to an embodiment of this application.

Reference signs:

battery pack 1; upper box body 2; lower box body 3; battery module 4; secondary battery 5; housing 51; electrode assembly 52; top cover assembly 53; three-dimensional porous skeleton 600; pore 601 of a first pore size; and pore 602 of a second pore size.

**DESCRIPTION OF EMBODIMENTS**

The following specifically discloses embodiments of a porous material and a preparation method thereof, a current collector, a secondary battery, and an apparatus in this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

[Porous material]

In some embodiments, this application provides a porous material. The porous material has pores of a first pore size and pores of a second pore size. The first pore size is n micrometers, and $0.5 \leq n \leq 20$; and the second pore size is m nanometers, and $10 < m < 400$. An apparent volume of the porous material is V, a total pore volume of the pores of the first pore size is $V_1$, a total pore volume of the pores of the second pore size is $V_2$, and the porous material satisfies the following relationships: $(V_1 + V_2)/V = 20\%\text{-}90\%$, $V_2/V = 15\%\text{-}70\%$, and $V_1/V = 5\%\text{-}70\%$. The porous material in the foregoing solution is characterized by innovative multilevel pore size distribution.

The porous material in the foregoing solution is characterized by innovative multilevel pore size distribution.

This novel porous material is particularly suitable for use in anode-free (anode free) metal batteries (for example, anode-free lithium metal batteries or anode-free sodium metal batteries) or batteries with metal or alloy negative electrodes. Inner walls of the pores of the first pore size (hereinafter referred to as macropores) may serve as a matrix for active substance deposition. In addition, the macropores provide electrolyte infiltration paths. Inner walls of the pores of the second pore size (hereinafter referred to as micropores) serve as a matrix for active substance deposition. The micropores increase the specific surface area of the material, thereby allowing the porous material to be loaded with more active substances. In addition, the micropores also serve as a template for active substance deposition. Specifically, subject to the limitation of the size of micropores, the active substance deposited in the micropores is measured in nanometers, and the nanoscale active substance has a higher ionic conductivity due to a small size. This can improve the overall ionic conductivity of the electrodes, improve the rate performance of the battery, and ultimately improve the capacity, cycling stability, and rate performance of the battery. Furthermore, the micropores can also restrict swelling of the active material to avoid failure of the active material due to pulverization.

In some embodiments, a value of $(V_1 + V_2)/V$ is 20%-30%, 30%-40%, 40%-50%, 50%-60%, 60%-70%, 70%-80%, or 80%-90%.

In some embodiments, a value of $V_2/V$ is 20%-30%, 30%-40%, 40%-50%, 50%-60%, or 60%-70%.

In some embodiments, a total specific surface area of the porous material is S, a specific surface area of the pores of the first pore size is $S_1$, and a specific surface area of the pores of the second pore size is $S_2$; where $S_1/S$ = 7%-32% and $S_2/S$ = 68%-93%. The porous material in the foregoing solution is characterized by a specific surface area distribution of pores.

In some embodiments, a value of $S_1/S$ is 10%-15%, 15%-20%, 20%-25%, or 25%-30%.

In some embodiments, a value of $S_1/S$ is 70%-75%, 75%-80%, 80%-85%, or 85%-90%.

In some embodiments, the second pore size is m nanometers, and 20 < m < 200. The porous material in the foregoing solution is characterized by an innovative pore size distribution.

In some embodiments, the second pore size is m nanometers, and a value of m is 10-50, 50-100, 100-150, 150-200, 200-250, 250-300, 300-350, or 350-400.

In some embodiments, the first pore size is n micrometers, and $0.5 \leq n \leq 10$. The porous material in the foregoing solution is characterized by an innovative pore size distribution.

In some embodiments, the first pore size is n micrometers, and a value of n is 0.5-1, 1-5, 5-10, 10-15, or 15-20.

In some embodiments, the porous material is made of a metal substance or an alloy containing element M, and the element M is selected from copper, aluminum, or a combination thereof. The porous material in the foregoing solution has an innovative component.

In some embodiments, the porous material is prepared using a dealloying method.

In some embodiments, the porous material is gas permeable and/or liquid permeable.

According to a second aspect, this application provides a porous material preparation method. The method includes:

providing a multiphase alloy, where the multiphase alloy contains an $\alpha$Mn phase and a $\gamma$Mn-M phase, and element M is selected from copper, aluminum, or a combination thereof; and
removing at least part of element Mn from the $\alpha$Mn phase and at least part of element Mn from the $\gamma$Mn-M phase by using a dealloying method.

The porous material has pores of a first pore size and pores of a second pore size. The first pore size is n micrometers, and 0.5 < n < 20; and the second pore size is m nanometers, and 10 < m < 400. An apparent volume of the porous material is V, a total pore volume of the pores of the second pore size is $V_2$, a total pore volume of the pores of the first pore size is $V_1$, and the porous material has one or more of the following characteristics: (1) $(V_1 + V_2)/V$ = 20%-90%, (2) $V_2/V$ = 15%-70%, and (3) $V_1/V$ = 5%-70%.

In the foregoing method, the multiphase alloy with a unique organizational structure is dealloyed innovatively to obtain the porous material with an innovative pore distribution characteristic.

According to a phase diagram of a Mn-Cu binary alloy, the Mn-Cu binary alloy (Mn has a percentage of 90 at.%-60 at.%) is of a single-phase y structure at a temperature of 700°C-865°C and is of a biphasic $\alpha/\gamma$ structure at a temperature of 500°C-700°C. Therefore, a Mn-Cu alloy prepared by means of melting can be first annealed at a high temperature (700°C-865°C) to obtain a single-phase y alloy with excellent plasticity, so as to prepare precursor alloys of different shapes. Subsequently, aging treatment is performed at a low temperature (500°C-700°C) to form a biphasic $\alpha/\gamma$ structure used for preparing the final porous material.

One or more embodiments of this application have one or more of the following beneficial effects.

(1) The porous material preparation method features low costs.
(2) The porous material preparation method can be used to obtain a porous material of a large size.

(3) In the porous material preparation, the first product containing the γMn-M phase has good plasticity, and can be processed into processed products of different shapes and sizes using a plasticizing method (forging, rolling, drawing, or the like). Subsequent second heat treatment and dealloying operations on the processed product have almost no change in the shape or size of the processed product.

(4) The porous material preparation method allows flexible adjustment of the pore sizes and proportions of pores of a second pore size and pores of a first pore size in the porous material. For example, the temperature and time for the second heat treatment are adjusted to control the percentage and size of the αMn phase in the second product, thereby adjusting the percentage and pore size of the pores of the first pore size in the porous material. For another example, the corrosion temperature for dealloying is adjusted to control the percentage and pore size of the pores of the second pore size in the porous material.

In some embodiments, based on all element Mn in the αMn phase, at least more than 90 at.% of element Mn is removed from the αMn phase using the dealloying method. Based on this, the obtained porous material is characterized by an innovative pore distribution.

In some embodiments, based on all element Mn in the γMn-M phase, at least more than 90 at.% of element Mn is removed from the γMn-M phase using the dealloying method. Based on this, the obtained porous material is characterized by an innovative pore distribution.

In some embodiments, based on all the element M in the multiphase alloy, less than 10 at.% of the element M is removed using the dealloying method. Based on this, the obtained porous material is characterized by an innovative pore distribution.

In some embodiments, a percentage of element Mn in the αMn phase is > 99 at.%. Based on this, the obtained porous material is characterized by an innovative pore distribution.

In some embodiments, a percentage of element Mn in the γMn-M phase is 40 at.%-80 at.%. Based on this, the obtained porous material is characterized by an innovative pore distribution.

In some embodiments, the γMn-M phase is a solid solution. Based on this, the obtained porous material is characterized by an innovative pore distribution.

In some embodiments, a percentage of the αMn phase in the multiphase alloy is 22 vol%-70 vol%. Based on this, the obtained porous material is characterized by an innovative pore distribution.

In some embodiments, a percentage of the γMn-M phase in the multiphase alloy is 30 vol%-78 vol%. Based on this, the obtained porous material is characterized by an innovative pore distribution.

In some embodiments, in a metallographic image of the multiphase alloy, an average size of the αMn phase is 0.5-10 micrometers. The average size herein can be understood as an average diameter of equal-area circles of the αMn phase.

In some embodiments, in the metallographic image of the multiphase alloy, an average size of the γMn-M phase is 0.5-10 micrometers. The average size herein can be understood as an average diameter of equal-area circles of the γMn-M phase.

In some embodiments, in the metallographic image of the multiphase alloy, the average size of the αMn phase, which is bright white in the metallographic structure, is 0.5-10 micrometers. Based on this, the obtained porous material is characterized by an innovative pore distribution.

In some embodiments, in the metallographic image of the multiphase alloy, the average size of the γMn-M phase, which is black grey in the metallographic structure, a × b, where a = 0.89-5 micrometers and b = 0.89 micrometer -1.75 micrometers. Based on this, the obtained porous material is characterized by an innovative pore distribution.

In some embodiments, the term "metallographic image" refers to a micrograph that can reflect the microstructure, especially the phase distribution, of metal. The metallographic image may be taken using an optical microscope or an electron microscope.

In some embodiments, the αMn phase and the γMn-M phase are uniformly distributed in the multiphase alloy. Based on this, the obtained porous material is characterized by an innovative pore distribution.

In some embodiments, the multiphase alloy contains element Mn and the element M, a percentage of element Mn is 60 at.%-90 at.% and a percentage of the element M is 10 at.%-40 at.% and the element M is selected from copper, aluminum, or a combination thereof. Based on this, the obtained porous material is characterized by an innovative pore distribution.

In some embodiments, the dealloying process refers to selectively removing relatively active elements from the system and interconnecting the remaining metal atoms based mainly on a difference in standard electrochemical potentials among precursor components, so as to obtain a porous material.

In some embodiments, the dealloying method is selected from chemical corrosion, electrochemical corrosion, or a combination thereof. Based on this, the obtained porous material is characterized by an innovative pore distribution.

In some embodiments, the porous material preparation method further includes steps of preparing the multiphase alloy, and the steps specifically include:

providing an alloy precursor, where the alloy precursor contains the element M and element Mn, and the element M is selected from copper, aluminum, or a combination thereof;

performing first heat treatment on the alloy precursor to obtain a first product, where the first product contains a γMn-M phase; and

performing second heat treatment on the product obtained in the previous step to obtain a second product, where the second product contains an αMn phase and a γMn-M phase. Based on this, the obtained porous material is characterized by an innovative pore distribution. The first product containing the γMn-M phase has excellent room-temperature plasticity. When the first product is processed using a plasticizing method such as forging, rolling, and drawing, processed products of different shapes and sizes can be obtained. The processed product can have a stable shape and size during subsequent heat treatment and dealloying.

In some embodiments, a temperature for the first heat treatment is 700°C-865°C. Based on this, the obtained porous material is characterized by an innovative pore distribution.

In some embodiments, a time for the first heat treatment is 0.16 hours or longer, for example, 1 hour-2 hours. Based on this, the obtained porous material is characterized by an innovative pore distribution.

In some embodiments, cooling, for example, water cooling, is performed at a cooling speed of 20°C/s-1000°C/s after the first heat treatment. Based on this, the obtained porous material is characterized by an innovative pore distribution.

In some embodiments, the first heat treatment is configured to obtain a first product, in which a percentage of the γMn-M phase is 95 vol%-100 vol%.

In some embodiments, a percentage of the γMn-M phase in the first product is 95 vol%-100 vol%.

In some embodiments, the method further includes an operation of plasticizing the first product prior to the second heat treatment.

In some embodiments, a temperature for the second heat treatment is 500°C-700°C. Based on this, the obtained porous material is characterized by an innovative pore distribution.

In some embodiments, a time for the second heat treatment is 1 h-4 h, for example, 2 h-3 h. Based on this, the obtained porous material is characterized by an innovative pore distribution.

In some embodiments, cooling is performed at a cooling speed of 20°C/s-1000°C/s after the second heat treatment. Based on this, the obtained porous material is characterized by an innovative pore distribution.

In some embodiments, the second heat treatment is configured to convert part of the γMn-M phase in the first product into the αMn phase.

In some embodiments, a percentage of the αMn phase in the second product is 22 vol%-70 vol%, for example, 22 vol%-30 vol%, 30 vol%-40 vol%, 40 vol%-50 vol%, 50 vol%-60 vol%, or 60 vol%-70 vol%, and a percentage of the γMn-M phase is 30 vol%-78 vol%, for example, 30 vol%-40 vol%, 40 vol%-50 vol%, 50 vol%-60 vol%, or 60 vol%-78 vol%.

In some embodiments, the alloy precursor is an ingot (for example, a melting ingot). Based on this, the porous material preparation method features low costs. Based on this solution, a porous material of a large volume can be prepared.

In some embodiments, the porous material obtained using the method has pores of a first pore size and pores of a second pore size; the second pore size is m nanometers, and $10 < m < 400$, for example, $20 < m < 200$; and the first pore size is n micrometers, and $0.5 \leq n \leq 20$, for example, $0.5 \leq n \leq 10$. Based on this, the obtained porous material is characterized by an innovative pore distribution.

In some embodiments, an apparent volume of the porous material obtained using the method is V, a total pore volume of the pores of a second pore size is $V_2$, a total pore volume of the pores of a first pore size is $V_1$, and the porous material has one or more of the following characteristics:

$$(1) \ (V_1 + V_2)/V = 20\%–90\%;$$

$$(2) \ V_2/V = 15\%–70\%;$$

and

$$(3) \ V_1/V = 5\%–70\%.$$

Based on this, the obtained porous material is characterized by an innovative pore distribution.

In some embodiments, a total specific surface area of the porous material is S, a specific surface area of the pores of the first pore size is $S_1$, and a specific surface area of the pores of the second pore size is $S_2$; where $S_1/S$ = 7%-32% and $S_2/S$ = 68%-93%. Based on this, the obtained porous material is characterized by an innovative pore distribution.

In some embodiments, the porous material has a size of not less than 10 mm in each direction, for example, not less than 5 mm or not less than 2 mm.

In some embodiments, this application provides a porous material prepared using the method according to any one of the foregoing embodiments.

In some embodiments, this application provides a current collector including the porous material according to any one of the foregoing embodiments.

In some embodiments, this application provides a secondary battery including the current collector according to any one of the foregoing embodiments.

In some embodiments, this application provides an apparatus including the secondary battery according to any one of the foregoing embodiments, and the secondary battery provides electric energy for the apparatus.

In some embodiments, $\alpha$Mn is an allotrope of manganese of a cbcc structure.

In some embodiments, $\gamma$Mn is an allotrope of manganese of an fcc structure.

In some embodiments, the $\gamma$Mn-M phase is a solid solution phase formed by dissolving the element M in $\gamma$Mn.

For example, the yMn-Cu phase is a solid solution phase formed by dissolving element Cu in $\gamma$Mn.

In some embodiments, a solid solution is a single-phase crystalline solid formed by dissolving one or more solute components into a crystalline solvent and maintaining the lattice type of the solvent.

[Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (such as lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

[Positive electrode plate]

The positive electrode plate typically includes a positive electrode current collector and a positive electrode film layer provided on at least one surface of the positive electrode current collector, where the positive electrode film layer includes a positive electrode active material. A surface treatment composite may be provided between the positive electrode current collector and the positive electrode film layer.

For example, the positive electrode current collector includes two opposite surfaces in its thickness direction, and the positive electrode film layer is disposed on either or both of the two opposite surfaces of the positive electrode current collector.

In some embodiments, the positive electrode current collector may contain the porous material according to any one of the foregoing embodiments of this application. The positive electrode current collector may also be a composite current collector, which may be formed, for example, by compounding the porous material according to any one of the foregoing embodiments with a polymer material substrate (for example, a substrate of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include, but are not limited to, at least one of lithium cobalt oxides (for example, $LiCoO_2$), lithium nickel oxides (for example, $LiNiO_2$), lithium manganese oxides (for example, $LiMnO_2$ and $LiMn_2O_4$), lithium nickel cobalt oxides, LiMnCo oxides, LiNiMn oxides, LiNiCo oxides (for example, $LiNi_{1/3}Co_{1/3}Mn_{1/3}O_2$ (also abbreviated as NCM333), $LiNi_{0.5}Co_{0.2}Mn_{0.3}O_2$, (also abbreviated as NCM523), $LiNi_{0.5}Co_{0.25}Mn_{0.25}O_2$ (also abbreviated as NCM211), $LiNi_{0.6}Co_{0.2}Mn_{0.2}O_2$ (also abbreviated as NCM622), and $LiNi_{0.8}Co_{0.1}Mn_{0.1}O_2$ (also abbreviated as NCM811)), lithium nickel cobalt aluminum oxides (for example, $LiNi_{0.85}Co_{0.15}Al_{0.05}O_2$), modified compounds thereof, and the like. Examples of the olivine-structured lithium-containing phosphate may include but are not limited to at least one of lithium iron phosphate (for example, LiFePO$_4$ (LFP for short)), a composite material of lithium iron phosphate and carbon, lithium manganese phosphate (for example, LiMnPO$_4$), composite materials of lithium manganese phosphate and carbon, lithium manganese iron phosphate, and composite materials of lithium manganese iron phosphate and carbon.

In some embodiments, the positive electrode film layer further optionally includes a surface treatment. As an example, the surface treatment may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoro-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents for preparing the positive electrode plate, for example, a positive electrode active material, a conductive agent, a surface treatment, and any other constituents, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode current collector and negative electrode plate]

The porous material of this application may be directly used as a negative electrode-side current collector (or electrode) of an anode-free (anode free) metal battery (for example, an anode-free lithium metal battery or an anode-free sodium metal battery).

In a lithium anode-free battery, all active lithium ions are initially stored in a positive electrode material. During initial charging, the lithium ions are retrieved from a positive electrode, move to a negative electrode, and plated directly in situ on a bare negative electrode current collector to form a lithium metal negative electrode. During subsequent discharging, the active lithium ions are stripped from the lithium metal negative electrode formed in situ and intercalated into the positive electrode. With a small size, the lithium anode-free battery has a high energy density.

The porous material of this application can also be used as a negative electrode-side current collector of a battery with a negative electrode containing active metal/alloy.

In some embodiments, the active metal/alloy is, for example, lithium metal or lithium alloy.

In some embodiments, the negative electrode plate of a lithium metal battery uses the porous material of this application as the negative electrode current collector, and a lithium metal layer is formed through deposition on an outer surface and/or inside the pores of the porous material.

The term "lithium alloy" used herein is used to indicate a substance capable of forming an alloy with lithium by means of charging and reversibly adsorbing and releasing lithium. Examples of the substance capable of forming an alloy with lithium include metal elements such as tin (Sn), silicon (Si), zinc (Zn), aluminum (Al), magnesium (Mg), indium (In), cadmium (Cd), lead (Pb), bismuth (Bi), and antimony (Sb), and compounds and alloys thereof (including alloys of lithium and these elemental metals). One, two, or more of these substances may be appropriately selected for suitable use.

In some embodiments, active metals/alloys other than lithium metals or lithium alloys include metal elements such as tin (Sn), silicon (Si), zinc (Zn), aluminum (Al), magnesium (Mg), indium (In), cadmium (Cd), lead (Pb), bismuth (Bi), and antimony (Sb), and compounds and alloys thereof (including alloys of lithium and these elemental metals).

In some embodiments, the active metals/alloys may be deposited on the surface and inside the pores of the porous material by means of electrodeposition, vapor deposition (for example, physical/chemical vapor deposition), magnetron sputtering, or the like to obtain the negative electrode of a battery.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(trifluorosulfonyl)imide, lithium bistrifluoromethanesulfonimide, lithium trifluoromethanesulfonate, lithium difluorophosphate, lithium difluoro(oxalato)borate, lithium dioxalate borate, lithium difluoro(dioxalato)phosphate, and lithium tetrafluoro oxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte optionally further includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used to encapsulate the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic, which may be polypropylene, polybutylene terephthalate, polybutylene succinate, or the like.

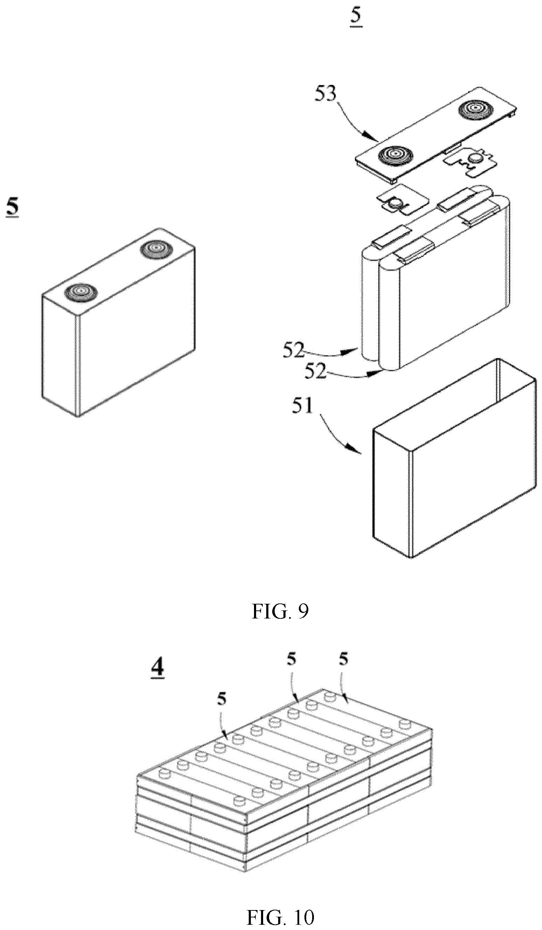

This application has no special limitation on a shape of the secondary battery, which may be cylindrical, rectangular, or of any other shapes. For example, FIG. 9 shows an overall view and an exploded view of a prismatic secondary battery 5 as an example.

In some embodiments, referring to FIG. 9, the outer package may include a housing 51 and a cover plate 53. The housing 51 may include a bottom plate and side plates connected to the bottom plate, and the bottom plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 10 shows a battery module 4 as an example. Referring to FIG. 10, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened with fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

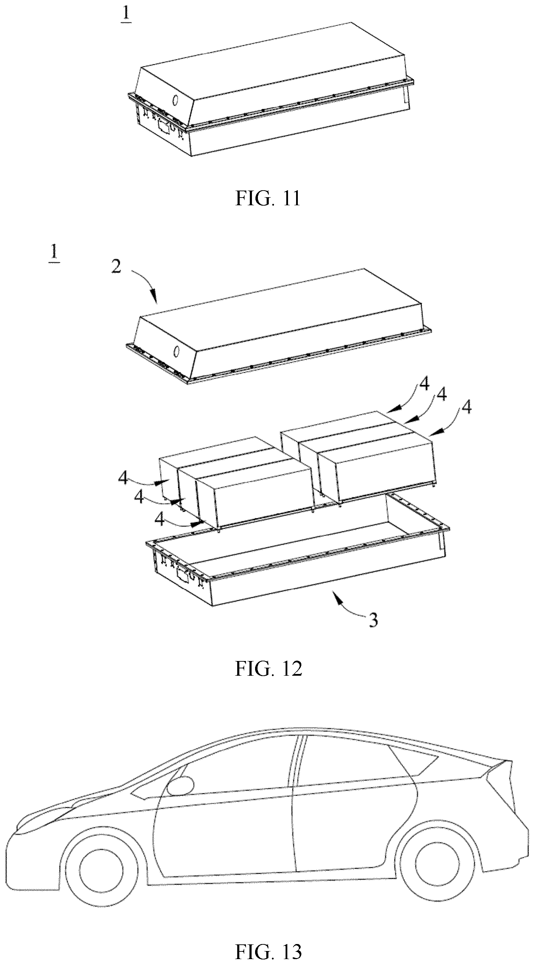

FIG. 11 and FIG. 12 show a battery pack 1 as an example. Referring to FIG. 11 and FIG. 12, the battery pack 1 may include a battery box and a plurality of battery modules 4 arranged in the battery box. The battery box includes an upper box body 2 and a lower box body 3. The upper box body 2 can cover the lower box body 3 to form a closed space for accommodating the battery modules 4. The plurality of battery modules 4 may be arranged in the battery box in any manner.

In addition, this application further provides an apparatus. The apparatus includes at least one of the secondary battery, the battery module, and the battery pack according to this application. The secondary battery, the battery module, or the battery pack may be used as a power source of the apparatus, or an energy storage unit of the apparatus. The apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like, but is not limited thereto.

A secondary battery, a battery module, or a battery pack may be selected for the apparatus according to requirements for using the apparatus.

FIG. 13 shows an apparatus as an example. The apparatus is a battery electric vehicle, a hybrid electric vehicle, or a plug-in hybrid electric vehicle, or the like. To meet requirements of the apparatus for high power and high energy density of secondary batteries, a battery pack or a battery module may be used.

Example 1:

(1) Pure copper and pure manganese (purity $\geq$ 99.9%) were provided at a ratio of Mn:Cu = 80:20 (at.%), and a button ingot of $Mn_{80}Cu_{20}$ (at.%) alloy with a size of $\varphi$ 12 mm $\times$ 7 mm was prepared by means of vacuum induction melting, and a sample of 2 mm $\times$ 2 mm $\times$ 4 mm of Mn-Cu alloy was cut from the center of the button ingot.

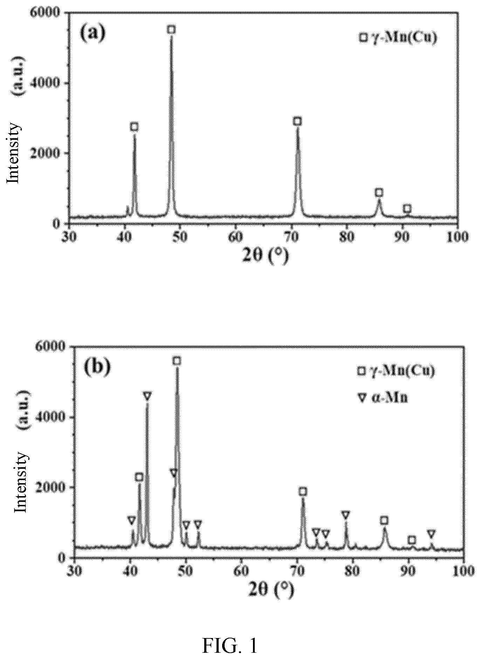

(2) First heat treatment was performed on the Mn-Cu alloy sample to obtain a single-phase alloy consisting of a $\gamma$Mn-Cu phase (hereinafter referred to as a single-phase $\gamma$ alloy). A temperature for the first heat treatment was 750°C, a time for the heat treatment was 10 minutes, and the cooling method was water cooling. The XRD characterization result is shown in FIG. 1 (a). Diffraction peaks of the $\gamma$Mn-Cu phase can be observed in the figure.

(3) Second heat treatment was performed on the Mn-Cu alloy after the first heat treatment to obtain a biphasic alloy consisting of the $\alpha$Mn phase and the $\gamma$Mn-Cu phase (hereinafter referred to as a biphasic $\alpha/\gamma$ alloy). A temperature for the second heat treatment was 650°C, a time for the heat treatment was one hour, and the cooling method was water cooling. The XRD characterization result is shown in FIG. 1 (b). Diffraction peaks of the $\alpha$Mn phase and the $\gamma$Mn-Cu phase can be observed in the figure.

(4) The Mn-Cu alloy after the second heat treatment was used as an alloy precursor and placed in an adequate amount of 0.1 mol/L HCl aqueous solution, and free corrosion was performed at a temperature of 60°C for dealloying. Dealloying was completed when no obvious bubbles escaped. Porous copper with a multilevel porous structure was obtained, and the porous copper maintained a block shape of 2 mm $\times$ 2 mm $\times$ 4 mm. As shown in the scanning electron microscope image in FIG. 2, the porous copper has pores of a first pore size (hereinafter referred to as macropores) and pores of a second pore size (hereinafter referred to as micropores). From the scanning electron microscope image, 50-100 macropores and 50-100 micropores were selected, the pore sizes of the macropores and micropores were measured, and average values were calculated. According to the results, the average pore size of the porous copper was 1.4 micrometers for the macropores and 80 nanometers for the micropores.

Example 2:

(1) Pure copper and pure manganese (purity $\geq$ 99.9%) were provided at a ratio of Mn:Cu = 80:20 (at.%), and a button ingot of $Mn_{80}Cu_{20}$ (at.%) alloy with a size of $\varphi$ 12 mm $\times$ 7 mm was prepared by means of vacuum induction melting, and a sample of 2 mm $\times$ 2 mm $\times$ 4 mm of Mn-Cu alloy was cut from the center of the button ingot.

(2) First heat treatment was performed on the Mn-Cu alloy sample to obtain a single-phase $\gamma$ alloy. A temperature for the first heat treatment was 750°C, a time for the heat treatment was 10 minutes, and the cooling method was water cooling.

(3) Second heat treatment was performed on the Mn-Cu alloy after the first heat treatment to obtain a biphasic $\alpha/\gamma$ alloy. A temperature for the second heat treatment was 650°C, a time for the heat treatment was four hours, and the cooling method was water cooling.

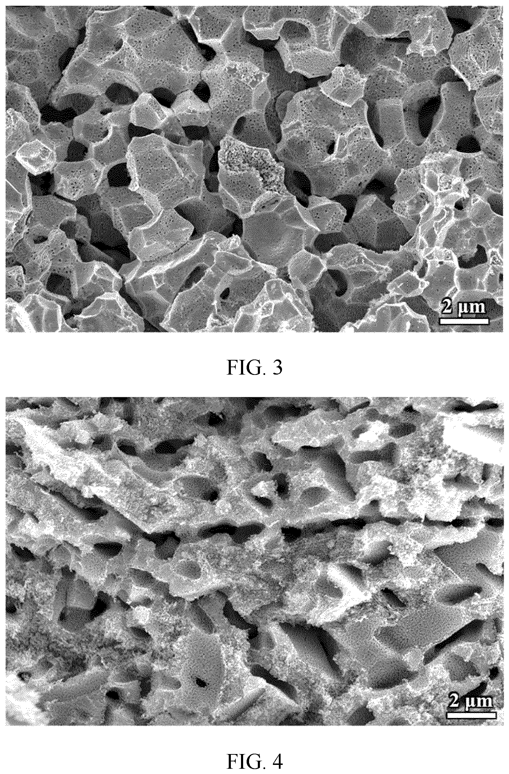

(4) The Mn-Cu alloy after the second heat treatment was used as an alloy precursor and placed in an adequate amount of 0.01 mol/L HCl + 1 mol/L KCl aqueous solution, and potentiostatic electrochemical dealloying was performed. The potential was -0.6 V (a reference electrode was an Ag/AgCl electrode, and a counter electrode was pure Cu), and the temperature was 60°C. Dealloying was completed when the current was below 10 $\mu$A/mm$^2$. Porous copper with a multilevel porous structure was obtained, and the porous copper maintained a block shape of 2 mm $\times$ 2 mm $\times$ 4 mm. As shown in the scanning electron microscope image in FIG. 3, the porous copper has pores of a first pore size (hereinafter referred to as macropores) and pores of a second pore size (hereinafter referred to as micropores). From the scanning electron microscope image, 50-100 macropores and 50-100 micropores were selected, the pore sizes of the macropores and micropores were measured, and average values were calculated. According to the results, the average pore size of the porous copper was 2.7 micrometers for the macropores and 80 nanometers for the micropores.

Example 3:

(1) Pure copper and pure manganese (purity ≥ 99.9%) were provided at a ratio of Mn:Cu = 65:35 (at.%), and a button ingot of MnesCuss (at.%) alloy with a size of φ 12 mm × 7 mm was prepared by means of vacuum induction melting, and a sample of 2 mm × 2 mm × 4 mm of Mn-Cu alloy was cut from the center of the button ingot.

(2) First heat treatment was performed on the Mn-Cu alloy sample to obtain a single-phase y alloy. A temperature for the first heat treatment was 850°C, a time for the heat treatment was 10 minutes, and the cooling method was water cooling.

(3) Second heat treatment was performed on the Mn-Cu alloy after the first heat treatment to obtain a biphasic $\alpha/\gamma$ alloy. A temperature for the second heat treatment was 670°C, a time for the heat treatment was one hour, and the cooling method was water cooling.

(4) The Mn-Cu alloy after the second heat treatment was used as an alloy precursor and placed in an adequate amount of 0.1 mol/L HCl aqueous solution, and free corrosion was performed at a temperature of 20°C for dealloying. Dealloying was completed when no obvious bubbles escaped. Porous copper with a multilevel porous structure was obtained, and the porous copper maintained a block shape of 2 mm × 2 mm × 4 mm. As shown in the scanning electron microscope image in FIG. 4, the porous copper has pores of a first pore size (hereinafter referred to as macropores) and pores of a second pore size (hereinafter referred to as micropores). From the scanning electron microscope image, 50-100 macropores and 50-100 micropores were selected, the pore sizes of the macropores and micropores were measured, and average values were calculated. According to the results, the average pore size of the porous copper was 0.8 micrometers for the macropores and 25 nanometers for the micropores.

Example 4:

(1) Pure copper and pure manganese (purity ≥ 99.9%) were provided at a ratio of Mn:Cu = 90:10 (at.%), and a button ingot of $Mn_{90}Cu_{10}$ (at.%) alloy with a size of φ 12 mm × 7 mm was prepared by means of vacuum induction melting, and a sample of 2 mm × 2 mm × 4 mm of Mn-Cu alloy was cut from the center of the button ingot.

(2) First heat treatment was performed on the Mn-Cu alloy sample to obtain a single-phase y alloy. A temperature for the first heat treatment was 850°C, a time for the heat treatment was 10 minutes, and the cooling method was water cooling.

(3) Second heat treatment was performed on the Mn-Cu alloy after the first heat treatment to obtain a biphasic $\alpha/\gamma$ alloy. A temperature for the second heat treatment was 670°C, a time for the heat treatment was one hour, and the cooling method was water cooling.

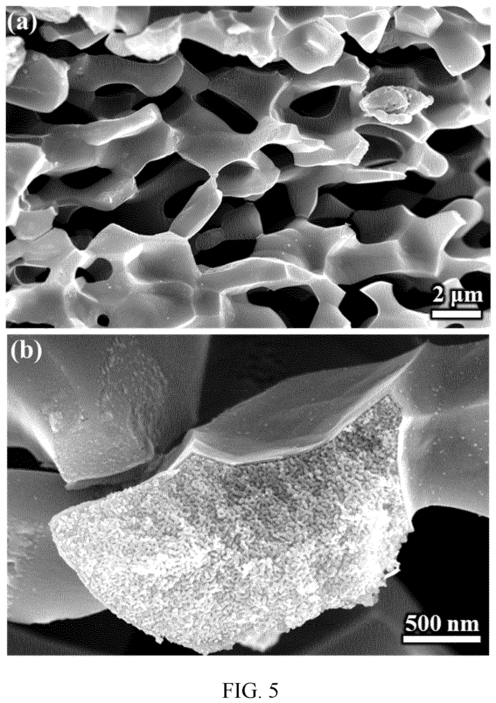

(4) The Mn-Cu alloy after the second heat treatment was used as an alloy precursor and placed in an adequate amount of 0.1 mol/L ascorbic acid aqueous solution, and free corrosion was performed at a temperature of 20°C for dealloying. Dealloying was completed when no obvious bubbles escaped. Porous copper with a multilevel porous structure was obtained, and the porous copper maintained a block shape of 2 mm × 2 mm × 4 mm. As shown in the scanning electron microscope image in FIG. 5, the porous copper has pores of a first pore size (hereinafter referred to as macropores) and pores of a second pore size (hereinafter referred to as micropores). From the scanning electron microscope image, 50-100 macropores and 50-100 micropores were selected, the pore sizes of the macropores and micropores were measured, and average values were calculated. According to the results, the average pore size of the porous copper was 1.2 micrometers for the macropores and 20 nanometers for the micropores.

Comparative example:

(1) Pure copper and pure manganese (purity ≥ 99.9%) were provided at a ratio of Mn:Cu = 80:20 (at.%), and a button ingot of $Mn_{80}Cu_{20}$ (at.%) alloy with a size of φ 12 mm × 7 mm was prepared by means of vacuum induction melting, and a sample of 2 mm × 2 mm × 4 mm of Mn-Cu alloy was cut from the center of the button ingot.

(2) Heat treatment was performed on the Mn-Cu alloy sample to obtain a single-phase y alloy. A temperature for the heat treatment was 750°C, a time for the heat treatment was 10 minutes, and the cooling method was water cooling.

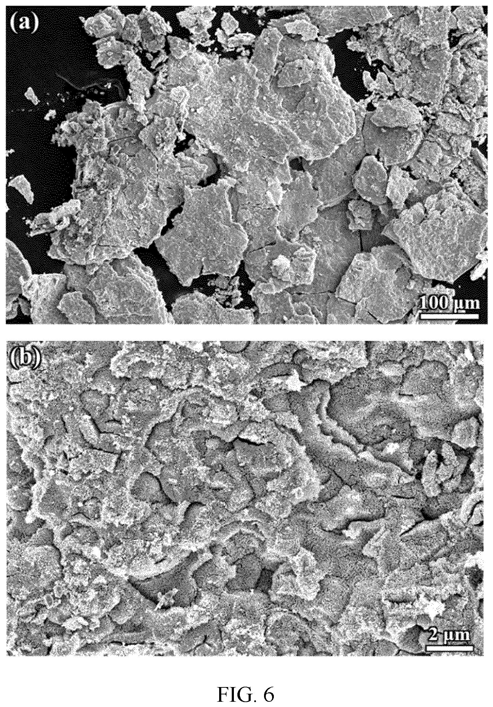

(3) The Mn-Cu alloy after the heat treatment was used as an alloy precursor and placed in an adequate amount of 0.1 mol/L HCl aqueous solution, and free corrosion was performed at a temperature of 60°C for dealloying. Dealloying was completed when no obvious bubbles escaped, and porous copper was obtained. As shown in FIG. 6 (a), the porous copper has pores only in one size, namely, micropores with an average pore size of 80 nanometers. As shown in FIG. 6 (b), the porous copper cannot form blocks and has a large number of cracks inside.

Structure and performance analysis

1. Phase composition, phase components, and phase sizes of the alloy precursor can be reasonably deduced according to the original composition of the alloy and the heat treatment process used in Examples 1 to 4 and the comparative example, as well as the Cu-Mn alloy phase diagram shown in FIG. 7. Refer to Table 1 for details.

**Table 1 Phase composition, phase components and phase sizes of alloy precursor**

| | Alloy precursor composition (at.%) | $\alpha$Mn phase | | | $\gamma$Mn-Cu phase | | |
|---|---|---|---|---|---|---|---|
| | | Phase component (at.%) | Volume proportion | Median particle size (micrometer) | Phase component (at.%) | Volume proportion | Median particle size (micrometer) |
| Example 1 | $Mn_{80}Cu_{20}$ | Mn | 50.4% | 1.4 | $Mn_{60}Cu_{40}$ | 49.6% | 2.4 |
| Example 2 | $Mn_{80}Cu_{20}$ | Mn | 50.4% | 2.7 | $Mn_{60}Cu_{40}$ | 49.6% | 4.0 |
| Example 3 | $Mn_{65}Cu_{35}$ | Mn | 22.6% | 0.8 | $Mn_{55}Cu_{45}$ | 77.4% | 1.5 |
| Example 4 | $Mn_{90}Cu_{10}$ | Mn | 69.0% | 1.2 | $Mn_{68}Cu_{32}$ | 31.0% | 0.9 |
| Comparative example | $Mn_{80}Cu_{20}$ | \ | 0 | \ | $Mn_{80}Cu_{20}$ | 100% | 2.5 |

2. According to the original composition of the alloy and the heat treatment process used in Examples 1 to 4 and the comparative example, as well as the Cu-Mn alloy phase diagram shown in FIG. 7, the following can be reasonably deduced based on the formulas below: a percentage of a total pore volume of the macropores in the porous copper to an apparent volume of the porous copper ($V_1$/V), a percentage of a total pore volume of micropores in the porous copper to the apparent volume of the porous copper ($V_2$/V), and a percentage of a total pore volume of macropores and micropores to the apparent volume of the porous copper (($V_1 + V_2$)/V). Refer to Table 2 for the results. Considering that the Mn-Cu alloy was fully dealloyed during the dealloying process, it can be reasonably deduced that the manganese element in the Mn-Cu alloy was completely removed. After the manganese element in the $\alpha$Mn phase of the Mn-Cu alloy was completely removed, the $\alpha$Mn phase disappeared, and pore structures of the first pore size (hereinafter referred to as macropores) were formed at the positions of the $\alpha$Mn phase. After the manganese element in the $\gamma$Mn-Cu phase of the Mn-Cu alloy was removed, manganese metal in the yMn-Cu phase disappeared, but the copper metal was retained, and pore structures of the second pore size (hereinafter referred to as micropores) were formed at the yMn-Cu phase. The foregoing macropore structures and micropore structures jointly constitute a multilevel porous structure of the porous copper.

FIG. 8 is a local schematic diagram of a porous material. The porous material in the figure has three-dimensional porous skeletons 600. A macropore structure is present between the three-dimensional porous skeletons 600, and the macropore structure has pores 601 of the first pore size. A micropore structure is present on a surface the three-dimensional porous skeleton 600, and micropore structure has pores 602 of the second pore size.

Assuming that the apparent volume of the porous copper is V, a percentage of the volume of the macropores ($V_1/V$) and a percentage of the volume of the micropores ($V_2/V$) can be calculated using the following equations:

$$V_1/V = \frac{[1 - (1 - x)/(1 - x_\gamma)] * 1.045}{1 - x + x * 1.045}$$

$$V_2/V = \frac{x_\gamma * 1.045}{1 - x_\gamma + x_\gamma * 1.045} * (1 - V_1)$$

where, x indicates a percentage of Mn (at.%) in the alloy precursor;
$x_\gamma$ indicates a percentage of Mn (at.%) in the yMn-Cu phase; and
1.045 is an atomic volume ratio of Mn and Cu.

**Table 2**

|  | x | $x_\gamma$ | $V_1/V$ | $V_2/V$ | $(V_1 + V_2)/V$ |
|---|---|---|---|---|---|
| Example 1 | 0.80 | 0.60 | 0.504 | 0.303 | 80% |
| Example 2 | 0.80 | 0.60 | 0.504 | 0.303 | 80% |
| Example 3 | 0.65 | 0.55 | 0.226 | 0.434 | 65% |
| Example 4 | 0.90 | 0.68 | 0.690 | 0.213 | 90% |
| Comparative example | 0.80 | 0.80 | - | 0.803 | - |

In addition, a total specific surface area of the porous copper is S (in units of m²/g), where a specific surface area of the macropores is $S_1$ and a specific surface area of the micropores is $S_2$. The values of $S_1/S$ and $S_2/S$ can be calculated according to $V_1/V$ and $V_2/V$. The values of the specific surface area of the macropores ($S_1$) and the specific surface area of the micropores $S_2$ are obtained according to the calculation formulas and methods provided in the literature Celal Soyarslan, et al., Acta Materialia, (2018), 149, 326. The total specific surface area $S = S_1 + S_2$. Relevant results are listed in Table 3 below.

The formula for calculating the specific surface area of the macropores $S_1$ is as follows:

$$S_1 = \frac{C_1}{\frac{L_1}{\Psi_1} * \rho_{Cu} * (1 - p) * V}$$

where $C_1$ is an empirical constant, with values listed in Table 3 below;
$\Psi_1$ indicates a volumetric fraction of the macropores $V_1/V$, with values listed in Table 2 above;
$L_1$ indicates an average diameter of the prismatic filaments forming a three-dimensional skeleton of the macropore structure;
$\rho_{Cu}$ indicates a density of copper, with a value of 8.9 g/cm³;
p indicates an atomic proportion of the manganese element in the alloy; and
V is 1 cm³.

The formula for calculating the specific surface area of the micropores $S_2$ is as follows:

$$S_2 = \frac{C_2}{\frac{L_2}{\Psi_2} * \rho_{Cu} * (1 - p) * V}$$

where $C_2$ is an empirical constant, with values listed in Table 2 below;

$\Psi_2$ indicates a volumetric fraction of the micropores $V_2/V$, with values listed in Table 2 above;

$L_2$ indicates an average diameter of the prismatic filaments forming a three-dimensional skeleton of the micropore structure;

$\rho_{Cu}$ indicates a density of copper, with a value of 8.9 $g/cm^3$;

p indicates an atomic proportion of the manganese element in the alloy; and

V is 1 $cm^3$.

**Table 3**

|  | Atomic proportion of Mn | Average edge diameter of macropores $L_1$ ($\mu$m) | Macropore constant $C_1$ | Specific surface area of macropores $S_1$ ($m^2$/g) | $S_1/S$ |
|---|---|---|---|---|---|
| Example 1 | 0.80 | 1.14 | 2.84 | 0.981 | 0.14 |
| Example 2 | 0.80 | 1 | 2.84 | 1.072 | 0.16 |
| Example 3 | 0.65 | 1.75 | 1.99 | 0.144 | 0.07 |
| Example 4 | 0.90 | 0.89 | 2.48 | 2.708 | 0.32 |
|  | p | Average edge diameter of micropores $L_2$ ($\mu$m) | Micropore constant $C_2$ | Specific surface area of micropores $S_2$ ($m^2$/g) | $S_2/S$ |
| Example 1 | 0.80 | 0.1 | 2.48 | 4.255 | 0.86 |
| Example 2 | 0.80 | 0.1 | 2.48 | 4.255 | 0.84 |
| Example 3 | 0.65 | 0.08 | 2.75 | 1.082 | 0.93 |
| Example 4 | 0.90 | 0.07 | 1.99 | 4.695 | 0.68 |

It can be seen from the foregoing experimental data that the porous material preparation method in this application can be used to prepare the porous material of this application. Featuring low costs, the porous material preparation method can be used to prepare products of a large size and allows the pore size and pore distribution of the porous material to be adjusted flexibly. The porous material of this application has an innovative porous structure.

The porous material of this application has pores of a first pore size and pores of a second pore size. Inner walls of the pores of the first pore size (hereinafter referred to as macropores) may serve as a matrix for active substance deposition. In addition, the macropores provide electrolyte infiltration paths. Inner walls of the pores of the second pore size (hereinafter referred to as micropores) serve as a matrix for active substance deposition. The micropores increase the specific surface area of the material, thereby allowing the porous material to be loaded with more active substances. In addition, the micropores also serve as a template for active substance deposition. Specifically, subject to the limitation of the size of micropores, the active substance deposited in the micropores is measured in nanometers, and the nanoscale active substance has a higher ionic conductivity due to a small size. This can improve the overall ionic conductivity of the electrodes, improve the rate performance of the battery, and ultimately improve the capacity, cycling stability, and rate performance of the battery. Furthermore, the micropores can also restrict swelling of the active material to avoid failure of the active material due to pulverization.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A porous material, **characterized in that** the porous material has pores of a first pore size and pores of a second pore size, wherein

   the first pore size is n micrometers, and $0.5 \leq n \leq 20$;
   the second pore size is m nanometers, and $10 < m < 400$; and
   an apparent volume of the porous material is V, a total pore volume of the pores of the first pore size is $V_1$, a total pore volume of the pores of the second pore size is $V_2$, and the porous material satisfies the following relationships:

   $$(V_1 + V_2)/V = 20\%–90\%;$$

   $$V_2/V = 15\%–70\%;$$

   and

   $$V_1/V = 5\%–70\%.$$

2. The porous material according to claim 1, **characterized in that** a total specific surface area of the porous material is S, a specific surface area of the pores of the second pore size is $S_1$, and a specific surface area of the pores of the second pore size is $S_2$;
   wherein

   $$S_1/S = 7\%–32\%;$$

   and

   $$S_2/S = 68\%–93\%.$$

3. The porous material according to claim 1 or 2, wherein the porous material has one or more of the following characteristics:

   (1) the second pore size is m nanometers, and $20 < m < 200$; and
   (2) the first pore size is n micrometers, and $0.5 \leq n \leq 10$.

4. The porous material according to any one of claims 1 to 3, wherein the porous material is made of a metal substance or an alloy containing element M, and the element M is selected from copper, aluminum, or a combination thereof.

5. A porous material preparation method, comprising:

   providing a multiphase alloy, wherein the multiphase alloy contains an $\alpha$Mn phase and a $\gamma$Mn-M phase, and element M is selected from copper, aluminum, or a combination thereof; and
   removing at least part of element Mn from the $\alpha$Mn phase and at least part of element Mn from the $\gamma$Mn-M phase by using a dealloying method; wherein

the porous material has pores of a first pore size and pores of a second pore size;
the first pore size is n micrometers, and $0.5 \leq n \leq 20$;
the second pore size is m nanometers, and $10 < m < 400$; and
an apparent volume of the porous material is V, a total pore volume of the pores of the first pore size is $V_1$, a total pore volume of the pores of the second pore size is $V_2$, and the porous material satisfies the following relationships:

$$(V_1 + V_2)/V = 20\%–90\%;$$

$$V_2/V = 15\%–70\%;$$

and

$$V_1/V = 5\%–70\%.$$

6. The method according to claim 5, **characterized by** one or more of the following:

(1) based on all element Mn in the $\alpha$Mn phase, at least more than 90 at.% of element Mn is removed from the $\alpha$Mn phase using the dealloying method;
(2) based on all element Mn in the $\gamma$Mn-M phase, at least more than 90 at.% of element Mn is removed from the $\gamma$Mn-M phase using the dealloying method; and
(3) based on all the element M in the multiphase alloy, less than 10 at.% of the element M is removed using the dealloying method.

7. The method according to claim 5 or 6, **characterized by** one or more of the following:

(1) a percentage of element Mn in the $\alpha$Mn phase is > 99 at.%; and
(2) a percentage of element Mn in the yMn-M phase is 40 at.%-80 at.%.

8. The method according to any one of claims 5 to 7, wherein the yMn-M phase is a solid solution.

9. The method according to claim 5 or 8, **characterized by** one or more of the following:

(1) a percentage of the $\alpha$Mn phase in the multiphase alloy is 22 vol%-70 vol%; and
(2) a percentage of the $\gamma$Mn-M phase in the multiphase alloy is 30 vol%-78 vol%.

10. The method according to claim 5 or 9, **characterized by** one or more of the following:

(1) in a metallographic image of the multiphase alloy, an average size of the $\alpha$Mn phase is 0.5-10 micrometers; and
(2) in the metallographic image of the multiphase alloy, an average size of the yMn-M phase is 0.5-5 micrometers.

11. The method according to any one of claims 5 to 10, wherein the $\alpha$Mn phase and the $\gamma$Mn-M phase are uniformly distributed in the multiphase alloy.

12. The method according to any one of claims 5 to 11, wherein the multiphase alloy contains element Mn and the element M, a percentage of element Mn is 60 at.%-90 at.%, and a percentage of the element M is 10 at.%-40 at.% and the element M is selected from copper, aluminum, or a combination thereof.

13. The method according to any one of claims 5 to 12, wherein the dealloying method is selected from chemical corrosion, electrochemical corrosion, or a combination thereof.

14. The method according to any one of claims 5 to 13, further comprising steps of preparing the multiphase alloy, wherein the steps specifically comprise:

providing an alloy precursor, wherein the alloy precursor contains the element M and element Mn, and the element M is selected from copper, aluminum, or a combination thereof;

performing first heat treatment on the alloy precursor to obtain a first product, wherein the first product contains a yMn-M phase; and

performing second heat treatment on the product obtained in the previous step to obtain a second product, wherein the second product contains an $\alpha$Mn phase and a $\gamma$Mn-M phase.

15. The method according to claim 14, wherein the method has one or more of the following characteristics:

(1) a temperature for the first heat treatment is 700°C-865°C;
(2) a time for the first heat treatment is 0.16 hours or longer;
(3) cooling is performed at a cooling speed of 20°C/s-1000°C/s after the first heat treatment;
(4) a percentage of the yMn-M phase in the first product is 95 vol%-100 vol%; and
(5) the method further comprises an operation of plasticizing the first product prior to the second heat treatment.

16. The method according to claim 14 or 15, wherein the method has one or more of the following characteristics:

(1) a temperature for the second heat treatment is 500°C-700°C;
(2) a time for the second heat treatment is 1 hour-4 hours;
(3) cooling is performed at a cooling speed of 20°C/s-1000°C/s after the second heat treatment; and
(4) a percentage of the $\alpha$Mn phase in the second product is 22 vol%-70 vol% and a percentage of the $\gamma$Mn-M phase is 30 vol%-78 vol%.

17. The method according to any one of claims 5 to 16, wherein the alloy precursor is an ingot.

18. The method according to any one of claims 5 to 17, wherein a total specific surface area of the porous material obtained using the method is S, a specific surface area of the pores of the second pore size is $S_1$, and a specific surface area of the pores of the second pore size is $S_2$;

wherein

$$S_1/S = 7\%–32\%;$$

and

$$S_2/S = 68\%–93\%.$$

19. A porous material, wherein the porous material is prepared using the method according to claims 5 to 18.

20. A current collector, comprising the porous material according to any one of claims 1 to 4 and claim 19.

21. A secondary battery, comprising the current collector according to claim 20; wherein

optionally, the secondary battery is an anode-free metal battery; or
optionally, a negative electrode active material of the secondary battery contains metal or alloy.

22. An apparatus, comprising the secondary battery according to claim 21, wherein the secondary battery provides electric energy for the apparatus.

FIG. 1

FIG. 2

FIG. 3

FIG. 4

FIG. 5

FIG. 6

FIG. 7

FIG. 8.

**5**

53

**5**

52

52

51

FIG. 9

**4**

**5**    **5**

**5**

FIG. 10

27

FIG. 11

FIG. 12

FIG. 13

## INTERNATIONAL SEARCH REPORT

| International application No. |
| --- |
| **PCT/CN2022/088398** |

### A. CLASSIFICATION OF SUBJECT MATTER

C22C 3/00(2006.01)i; C22C 1/08(2006.01)i; A61L 27/04(2006.01)i; C22C 9/00(2006.01)i; B22F 3/11(2006.01)i

According to International Patent Classification (IPC) or to both national classification and IPC

### B. FIELDS SEARCHED

Minimum documentation searched (classification system followed by classification symbols)

C22C; B22F; A61L

Documentation searched other than minimum documentation to the extent that such documents are included in the fields searched

Electronic data base consulted during the international search (name of data base and, where practicable, search terms used)

CNPAT, CNKI, WPI, EPODOC: 金属, 铜, 合金, 铜锰, 铝锰, 孔, 分级, 多级, 梯度, 微米, 纳米, 第一, 第二, 脱合金, metal, copper, alloly, CuMn, AlMn, porous, grad+, muti, micrometer, nanometer, first, second, deally+, αMn, γMn

### C. DOCUMENTS CONSIDERED TO BE RELEVANT

| Category* | Citation of document, with indication, where appropriate, of the relevant passages | Relevant to claim No. |
| --- | --- | --- |
| X | CN 108793211 A (CHINA PETROLEUM & CHEMICAL CORP. et al.) 13 November 2018 (2018-11-13) description, paragraphs [0010]-[0031] | 1, 3 |
| A | CN 111057982 A (HEFEI INSTITUTES OF PHYSICAL SCIENCE, CHINESE ACADEMY OF SCIENCES) 24 April 2020 (2020-04-24) entire document | 1-22 |
| A | CN 106467939 A (CHONGQING RUNZE PHARMACEUTICAL CO., LTD.) 01 March 2017 (2017-03-01) entire document | 1-22 |
| A | JP 2007277613 A (HOKKAIDO UNIVERSITY) 25 October 2007 (2007-10-25) entire document | 1-22 |
| A | CN 112048635 A (XI'AN UNIVERSITY OF TECHNOLOGY) 08 December 2020 (2020-12-08) entire document | 1-22 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 November 2022** | **19 December 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/088398** |

| Patent document cited in search report | | | Publication date (day/month/year) | Patent family member(s) | | | Publication date (day/month/year) |
| --- | --- | --- | --- | --- | --- | --- | --- |
| CN | 108793211 | A | 13 November 2018 | CN | 108793211 | B | 14 February 2020 |
| CN | 111057982 | A | 24 April 2020 | None | | | |
| CN | 106467939 | A | 01 March 2017 | CN | 106467939 | B | 09 June 2020 |
| JP | 2007277613 | A | 25 October 2007 | None | | | |
| CN | 112048635 | A | 08 December 2020 | None | | | |

Form PCT/ISA/210 (patent family annex) (January 2015)